# EUROPEAN PATENT APPLICATION

(11) **EP 1 767 435 A2**
(43) Date of publication of application: **28.03.2007**
(21) Application number: 06020024.3
(22) Date of filing: 25.09.2006
(51) Int. Cl.: B62D 5/04

(54) **Electric power steering control device**

(30) Priority: 27.09.2005 JP 2005280644
(71) Applicant: NSK LTD., Shinagawa-ku, Tokyo 141-8560 (JP)
(72) Inventor: Miura, Tomohiro NSK Ltd., Maebashi-shi Gunma 371-8527 (JP); Maeda, Masahiro NSK Ltd., Maebashi-shi Gunma 371-8527 (JP); Itakura, Yusuke NSK Ltd., Maebashi-shi Gunma 371-8527 (JP)
(74) Representative: Klingseisen, Franz

(57) **Abstract**

Generation of a steering assist force is allowed to continue by securing an appropriate control power without being affected by the fluctuation of a battery voltage. An electric power steering control device comprising steering torque detectionmeans 17 for detecting a steering torque, an electric motor 5 allowed to generate a steering assist force for a steering system, and steering assist control means 3 for controlling the electric motor based on the steering torque detected by the steering torque detection means 17 comprises a control power generating circuit 20 for stepping up a battery voltage of an in-vehicle battery 1 to generate a control power and supplying the generated control power at least to the steering assist control means 3.

## Description

### BACKGROUND OF THE INVENTION

### Field of the Invention

The present invention relates to an electric power steering control device, which comprises a steering torque detection means for detecting a steering torque, an electric motor for generating a steering assist force for a steering system, and steering assist control means for controlling the electric motor based on the steering torque detected by the steering torque detection means.

### Description of the Related Art

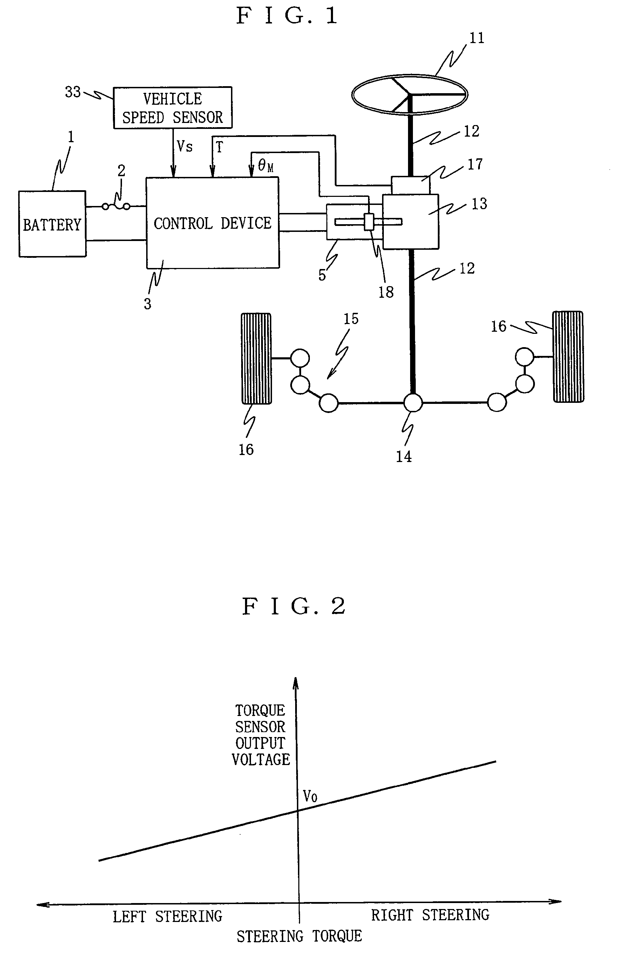

In general, as an electric power steering control device of this type, there is known, for example, a device in which, from among four field effect transistors constituting an H bridge circuit for driving an electric motor to generate a steering assist force of the electric power steering device, two field effect transistors at a power supply voltage Vcc side are connected to a charge pump, respectively, and by these charge pumps, the power supply voltages Vcc to 2 Vcc are generated and supplied to the gates of the field effect transistors, so that there is no need to perform a duty ratio limit in the vicinity of a duty ratio 100% in case the field effect transistors are driven by a pulse width modulating signal (see, for example, 08-340694A (Page 4, FIG. 1)).

However, in the conventional example disclosed in the Patent Document 1, since the field effect transistors constituting an H bridge circuit for driving the motor are supplied with a battery voltage by stepping up the voltage by the charge pump, it is possible to maintain gate voltage required to turn on the field effect transistor. However, there exists an unsolved problem of the case occurring where when the battery voltage is dropped, the stepped up voltage itself which is outputted from the charge pump is also dropped and the gate voltage required to turn on the field effect transistors is unable to be secured.

Further, if taking a survey of the entire electric power steering control device, for example, there exist such unsolved problems in that, in case a resolver is adopted in order to detect the rotation of the motor, when the battery voltage is dropped, the upper limit side of a resolver signal is cut and distorted under the influence of the voltage dip of the battery, and in a torque sensor also, since an exciting circuit is used when a magnetic signal is converted into an electrical signal, a linear range of this exciting circuit is narrowed down under the influence of the voltage dip of the battery or in a motor current detection circuit for detecting a motor current, though a potential difference at both ends of a shunt resistor is amplified by an operational amplifier, in this case also, it is not possible to obtain an accurate current detection value under the influence of the voltage dip of the battery or in case a steering angle sensor is adopted also, it is not possible to obtain accurate steering angle information under the influence of the voltage dip of the battery.

Hence, the present invention has been devised to aim at the above described unresolved problems of the conventional example, and it is an obj ect of the present invention to provide an electric power steering control device which can secure an appropriate control power and continue to generate a steering assist force without being influenced by the fluctuation of the battery voltage.

### SUMMARY OF THE INVENTION

To solve the above described object, an electric power steering control device according to claim 1 comprises a steering torque detectionmeans for detecting a steering torque, an electric motor for generating a steering assist force for a steering system, and a steering assist control means for controlling the electric motor based on the steering torque detected by the steering torque detection means, wherein a control power generating circuit is provided for adjusting the battery voltage of an in-vehicle battery to generate a control power, and supplying the generated control power at least to the steering assist control means.

Further, an electric power steering control device according to claim 2 comprises steering torque detection means for detecting a steering torque, an electric motor for generating a steering assist force for a steering system, and steering assist control means for controlling the electric motor based on the steering torque detected by the steering torque detection means, wherein the electric power steering control device comprises a control power generating circuit for adjusting a battery voltage of an in-vehicle battery to generate a control power, and the steering assist control means comprises a microcomputer for executing at least a steering control processing, a motor drive circuit having a switching element for driving the electric motor, a gate drive circuit for driving and controlling the switching element of the motor drive circuit based on an instruction from the microcomputer, and a power supply step-up circuit for supplying a high voltage to the gate drive circuit, and wherein the control power generated in the control power generating circuit is supplied to the power supply step-up circuit.

Further, an electric power steering control device according to claim 3 in the invention according to claim 2 consists in that the power supply step-up circuit is constituted by a charge pump.

Further, an electric power steering control device according to claim 4 in the invention according to any one of claims 1 to 3 has battery voltage detection means for detecting a low voltage state in which the battery voltage of the in-vehicle battery is dropped below a set voltage, wherein the control power generating circuit comprises a control power step-up circuit which is connected in series to the in-vehicle battery and, when the low voltage state is detected by the battery voltage detection means, steps up a battery voltage to a voltage required by a control power supply object apparatus, thereby generating a control power.

Further, an electric power steering control device according to claim 5 in the invention according to any one of claims 1 to 4 has battery voltage detection means for detecting a high voltage state in which the battery voltage of the in-vehicle battery is increased above the set voltage and wherein the control power generating circuit comprises a control power step-down circuit which, when a high voltage state is detected by the battery voltage detection means, steps down the battery voltage to a voltage required in the control power supply target apparatus, thereby generating a control power.

Further, an electric power steering control device according to claim 6 in the invention according to claim 1 consists in that the steering assist control means has at least a microcomputer and a voltage regulator for generating a control voltage supplied to the microcomputer based on the battery voltage of the in-vehicle battery, and in that the control power generating circuit comprises a control power step-up circuit which is connected in series to the voltage regulator and steps up the output voltage of the voltage regulator to a voltage required in a control voltage supply target apparatus, thereby generating a control power.

Further, an electric power steering control device according to claim 7 in the invention according to claim 2 consists in that the steering assist control means comprises a voltage regulator for generating a control voltage supplied to the microcomputer, and the control power generating circuit comprises a control power step-up circuit which is connected in series to the voltage regulator and steps up the output voltage of the voltage regulator to a voltage required in the control power supply target apparatus, thereby generating the control power.

According to the invention as claimed in claim 1, since the voltage of the in-vehicle battery is adjusted by the control power generating circuit to generate the control power and the generated control power is supplied at least to the steering assist control means, even when the battery voltage is dropped, the control voltage of each apparatus requiring the control power can be secured, and therefore, the advantages of being able to continue a state in which the electric motor is driven to generate a steering assist force can be obtained.

Further, according to the invention as claimed in claim 2, the voltage of the in-vehicle battery is adjusted by the control power generating circuit to generate the control power and the generated control power is supplied to the power supply step-up circuit. Therefore, even when the battery voltage is dropped, the power supply step-up circuit can step up the voltage to a sufficiently high voltage that can be supplied to the gate drive circuit, and the advantages of being able to continue a state in which the electric motor is driven to generate a steering assist force can be obtained.

Further, according to the invention as claimed in claim 3, since the power supply step-up circuit is constituted by a charge pump, a step-up power can be obtained with a simple configuration.

Further, according to the invention as claimed in claim 4, when the battery voltage detection means detects that the battery voltage of the in-vehicle battery is dropped blow the set voltage, the control power generating circuit causes the step-up circuit to step up the voltage up to a voltage required by the control power supply target apparatus so as to generate a control power, and therefore, even in case the battery voltage of the in-vehicle battery is temporarily dropped rapidly, the control voltage can be generated by the control power step-up circuit, and therefore, the advantages of being able to maintain a generating state of the steering assist force can be obtained.

Further, according to the invention as claimed in claim 5, when the battery voltage of the in-vehicle battery is put into a high voltage state in which the voltage is increased above a set voltage, the control power step-down circuit steps down the voltage to a voltage required in the control power supply target apparatus to generate the control power, and therefore, even in case the battery voltage of the in-vehicle battery is rapidly increased, it is possible to maintain the control voltage within a normal range, and the advantages of being able to suitably drive the electric motor so as to expand a steering assist control range.

Furthermore, according to the invention as claimed in claims 6 and 7, when the battery voltage of the in-vehicle battery is put into a low voltage state in which the voltage is droppedbelow a set voltage, the output voltage of the voltage regulator generating the control voltage supplied to the microcomputer is stepped up by the control power step-up circuit, so that an almost constant control voltage can be secured regardless of the fluctuation of the battery voltage, and therefore, the advantages of being able to appropriately drive the electric motor and continuing a generating state of the steering assist force can be obtained.

### BRIEF DESCRIPTION OF THE DRAWINGS

FIG. 1 is a schematic block diagram showing a first embodiment of the present invention;
FIG. 2 is a characteristic line view showing an output characteristic of a steering torque sensor;
FIG. 3 is a block diagram showing a specific constitution of a control device adaptable to the present invention;
FIG. 4 is a flowchart showing an example of a steering assist control processing procedure executed by a microcomputer;
FIG. 5 is a characteristic line view showing a steering assist instruction value calculating control map;
FIG. 6 is a flowchart showing an example of a control voltage processing procedure executed by a microcomputer;
FIG. 7 is a characteristic line view showing a step-up duty ratio calculating control map;
FIG. 8 is a characteristic line view showing step-down duty ratio calculating control map;
FIG. 9 is a block diagram corresponding to FIG. 3 showing a second embodiment of the present invention; and
FIG. 10 is an explanatory drawing to explain a relationship between a battery voltage and a power supply voltage of the microcomputer provided for the explanation of the operation in the second embodiment.

### DETAILED DESCRIPTION OF THE PREFERRED EMBODIMENTS

A first embodiment of the present invention will be described below based on the drawings.

FIG. 1 is a schematic block diagram showing the first embodiment of an electric power steering control device according to the present invention.

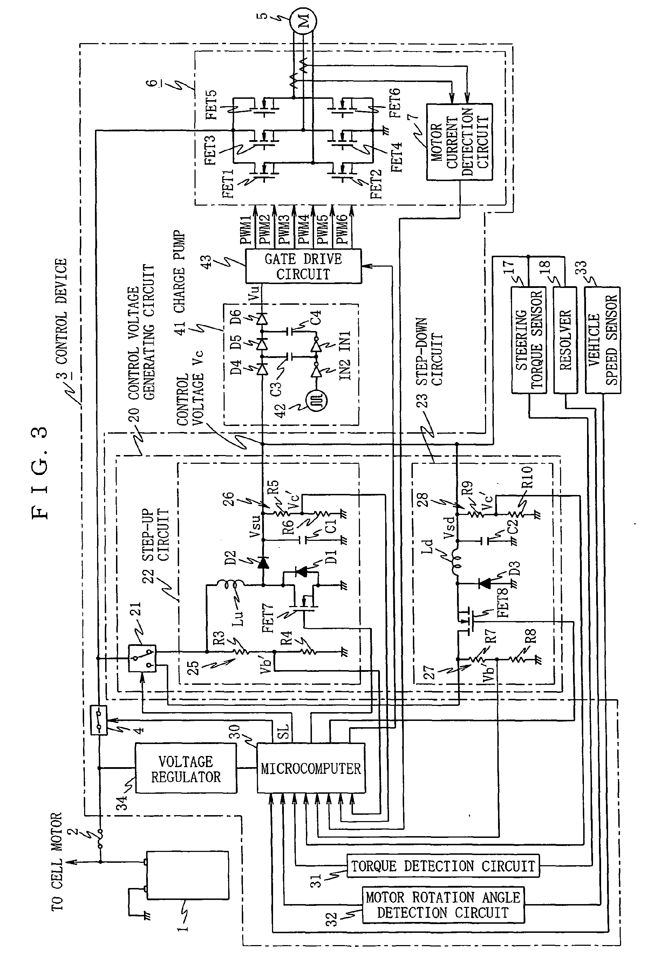

In the figure, reference numeral 1 denotes a battery of 12V in rated voltage mounted on an ordinary vehicle, and a battery voltage Vb outputted from this battery 1 is inputted to a control device 3, which is a steering assist control means, though a fuse 2. This control device 3 has amotor drive circuit 6 as motor driving means for driving an electric motor 5, which generates a steering assist force for a steering system inputted with the battery voltage Vb through a relay 4 shown in FIG. 3 through the fuse 2.

Here, the electric motor 5 is constituted by a three-phase AC driven brushless motor, and is operated as a steering assist force generating motor for generating a steering assist force of the electric power steering control device. This electric motor 5 is connected to a steering shaft 12 connected with a steeringwheel 11 through a speed reducer 13, and this steering shaft 12 is coupled with a rack and pinion mechanism 14, and this rack and pinion mechanism 14 is coupled with right and left rotary steering wheels 16 through a coupled mechanism 15 such as tie rods.

The steering shaft 12 is installed with a steering torque sensor 17 for detecting a steering torque inputted into the steering wheel 11, and at the same time, the electric motor 5 is installed with a resolver 18 for detecting a motor rotation angle, and a steering torque detection signal detected by the steering torque sensor 17 and a motor rotation angle detection signal detected by the resolver 18 are inputted to a microcomputer 30 to be described later.

Here, the steering torque sensor 17 is given to the steering wheel 11 and detects a steering torque conveyed to the steering shaft 12, and is constituted in such a manner as to convert the steering torque into a torsion angular displacement of a torsion bar in which the steering torque is, for example, inserted between unillustrated input shaft and output shaft, and detect this torsion angular displacement by a magnetic signal and convert it into an electrical signal. This steering torque sensor 17, as shown in FIG. 2, is constituted to output a torque detection value T in such a manner as to become a predetermined neutral voltage V₀ when the steering torque to be inputted is zero, and become a voltage increasing further than the neutral voltage V₀ according to the increase in the steering torque when steering to rightward from this state, and become a voltage decreasing further than the neutral voltage V₀ according to the increase in the steering torque when steering to leftward from a zero state of the steering torque.

The motor drive circuit 6, as shown in FIG. 3, constitutes a so-called inverter by a parallel circuit with 3 series circuits in which two field effect transistors FET 1 and FET 2, FET 3 and FET 4, and FET 5 and FET 6 are connected in series respectively. A connecting point of the field effect transistors FET 1 and FET 2, a connecting point of the field effect transistors FET 3 and FET 4, and a connecting point of the field effect transistors FET 5 and FET 6 are connected to the electric motor 5, and moreover, motor driving currents I mu and I mv outputted from an inverter to the electric motor are detected by a motor current detection circuit 7.

Further, a control voltage generating circuit 20, which is a control power generating circuit, for generating a control voltage Vc based on the battery voltage Vb is connected between the relay 4 and the motor drive circuit 6. This control voltage generating circuit 20 has a control power step-up circuit 22 and a step-down circuit 23 connected to a selector switch 21, which is connected between the relay 4 and the motor drive circuit 6.

The step-up circuit 22 is constituted by a reactor Lu having its one end connected to one output side of the selector switch 21, a field effect transistor FET 7 connected between the other end of the reactor and a grounding earth, a diode D1 connected by taking an anode as a source side and a cathode as a drain side between a source and a drain of the field effect transistor FET 7, a diode D2 having an anode connected to a connecting point between the reactor Lu and the field effect transistor FET 7, and a smoothing capacitor C1 connected between a cathode of the diode D2 and the grounding earth. This step-up circuit 22 is connected with a voltage dividing circuit 25 connecting in series resistors R3 and R4 for detecting, as a divided battery voltage Vb', the battery voltage Vb inputted in parallel with the reactor Lu and the field effect transistor FET 7, and moreover, is connected to a voltage dividing circuit 26 connecting in series resistors R5 and R6 for detecting, as a divided control voltage Vc', the control voltage Vc in parallel with the smoothing capacitor C1.

Further, the step-down circuit 23 is constituted by a field effect transistor FET 8 having a drain connected to the other output side of the selector switch 21, a reactor Ld having one end connected to a source of the field effect transistor FET 8, a diode D3 having an anode inserted as a grounding earth side between the connecting point with the field effect transistor FET 8 and the reactor Ld and the grounding earth, and a smoothing capacitor C2 inserted between the other end of the reactor Ld and the grounding earth. The control voltage Vc is outputted from both ends of the smoothing capacitor C2. This step-down circuit 23 is also connected with a voltage dividing circuit 27 connecting in series resistors R7 and R8 for detecting, as a divided battery voltage Vb', the battery voltage Vb between a source side of the field effect transistor FET 8 and the grounding earth, and moreover, is connected with a voltage dividing circuit 28 connecting in series resistors R9 and R10 for detecting, as a divided control voltage Vc', the control voltage Vc in parallel with a smoothing capacitor C2.

Further, the control device 3 has a charge pump 41, which is a power supply step-up circuit and is inputted with the control voltage Vc outputted from the step-up circuit 22 and the step-down circuit 23, and a gate drive circuit 43 for controlling each of the field effect transistors FET 1 to FET 6 of the motor drive circuit 6.

This charge pump 41 has a constitution in which three diodes D4 to D6 are connected in series in a forward direction, and one end of a charging and discharging capacitor C3 is connectedbetween the diodes D4 and D5, and one end of a charging and discharging capacitor C4 is connected between the diodes D5 and D6, and an inverter IN1 is connected between the other ends of the charging and discharging capacitors C3 and C4, and an oscillator 42 is connected to a connecting point between the inverter IN1 and the charging and discharging capacitor C3 through an inverter IN2, wherein a step-up voltage Vu stepping up twice the control voltage Vc inputted from the diode D6 is supplied to the gate drive circuit 43.

This gate drive circuit 43 switches on and off field effect transistors FET 1 to FET 6 by PWM (pulse width modulation) signals of duty ratios Du, Dv and Dw decided based on current instruction values Iut, Ivt and Iwt outputted from a microcomputer 30 to be described later, and controls the magnitude of the currents Imu, Imv, and Imw actually flowing to the electric motor 5. Here, the field effect transistors FET 1, FET 3 and FET 5 constituting an upper arm and the field effect transistors FET 2, FET 4 and FET 6 constituting a lower arm accompanied with the magnitude of the duty ratios Du, Dv and Dw are PWM-driven by carrying a dead time to avoid an arm shot, respectively.

Further, the control device 3 controls the selector switch 21, the step-up circuit 22 and the step-down circuit 23, and at the same time, has the microcomputer 30 for supplying a pulse width modulating signal of the duty ratio to allow the steering assist force to be generated by the electric motor 5 for the gate drive circuit 43.

This microcomputer 30 is inputted with a steering torque signal detected by the steering torque sensor 17, and based on this, a steering torque detection signal T from a torque detection circuit 31 for detecting the steering torque is inputted into an A/D conversion input terminal, and at the same time, a motor rotation angle signal θ_{M} from a motor rotation angle detection circuit 32 for outputting a motor rotation angle signal inputted with an output signal of the resolver 18 is inputted to an input terminal, and moreover, a vehicle speed detection value Vs outputted from a vehicle speed sensor 33 for detecting a vehicle speed Vs is inputted, and further, the divided battery voltage Vb' detected by the resistors R3 and R4 and resistors R7 and R8 of the voltage dividing circuits constituting input voltage detection circuits of the step-up circuit 22 and the step-down circuit 23 is inputted to an A/D conversion terminal, and at the same time, the divided control voltage Vc' detected by the resistors R5 and R6 and resistors R9 and R10 of the potential dividing circuits constituting the control voltage detection circuits of the step-up circuit 22 and the step-down circuit 23 is inputted to the A/D conversion terminal. This microcomputer 30 is connected to a connecting point of the fuse 2 and the relay 4, and is inputted, for example, with a stabilizing power supply as a control power supply outputted from a voltage regulator 34 for generating a microcomputer power supply of 5V.

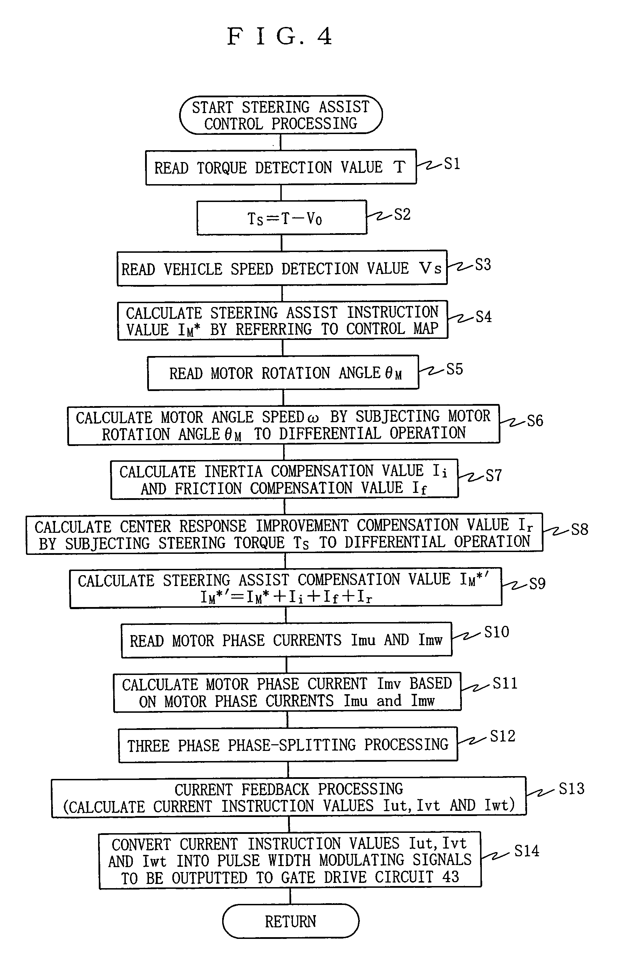

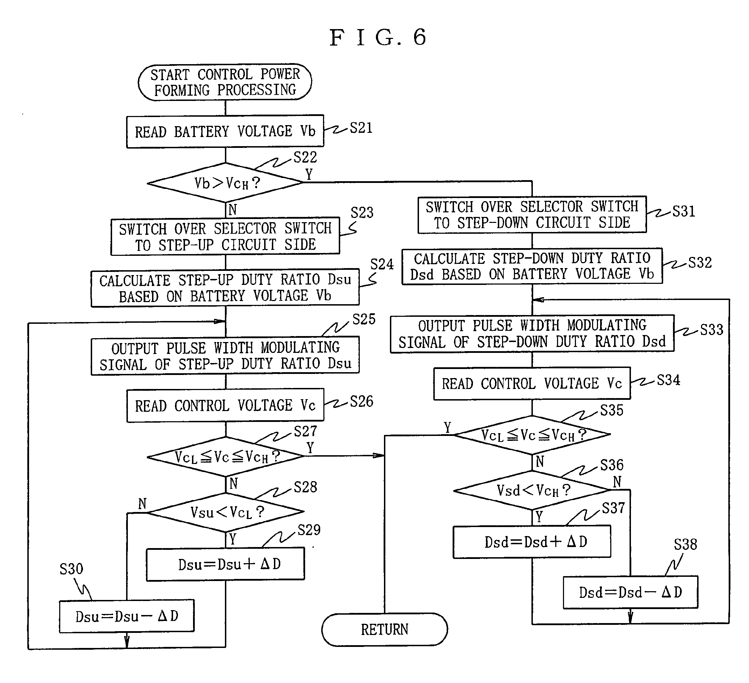

The microcomputer 30 executes a steering control processing shown in FIG. 4 and a control power supply generating processing shown in FIG. 6 based on each input signal.

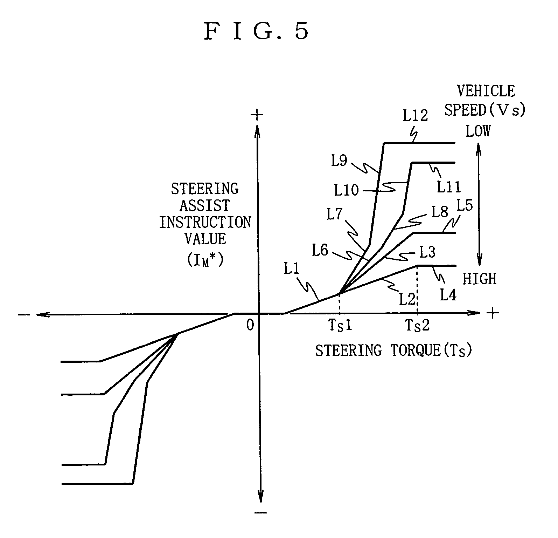

The steering control processing, as shown in FIG. 4, first at step S1, reads the torque detection value T detected by the steering torque sensor 17, and then, proceeds to step S2, and subtracts a neutral voltage V₀ from the torque detection value T and calculates a steering torque Tₛ (= T-V₀). Next, the processing proceeds to step S3, and reads the vehicle speed detection value Vs detected by the vehicle speed sensor 33, and then, proceeds to step S4, and calculates a steering assist instruction value I_{M}* which becomes amotor current instruction value based on the torque detection value and the vehicle speed detection value Vs by referring to a steering assist instruction value-calculating map shown in FIG. 5.

Here, the steering assist instruction value calculating map, as shown in FIG. 5, is constituted by a characteristic line view in which the steering torque detection value T is plotted in the axis of abscissas and the steering assist instruction value I_{M}* is plotted in the axis of ordinate, and the vehicle speed detection value Vs is taken as a parameter, and during a period in which a steering torque Tₛ increases from "0" in a forward direction and reaches a first set value Tₛ1, four characteristic lines are generated, which are constituted by a linear line portion L1 extending in a relatively slow grade regardless of the vehicle speed detection value Vs, linear line portions L2 and L3 extending in a relatively slow grade in a state in which the vehicle speed detection value Vs is relatively large when the steering torque Ts is increased further than the first set value Tₛ1, linear line portions L4 and L5 becoming parallel with the axis of abscissas in the vicinity of the second set value Tₛ2 in which the steering torque detection value Tₛ is larger than the first set value Tₛ1, linear line portions L6 andL7 having a relatively large grade in a state in which the vehicle speed detection value Vs is small, linear line portions L8 and L9 having a larger grade than these linear portions L6 and L7, a liner line portion L10 having a larger grade than the linear line portion L8, and linear line portions L11 and L12 extending in parallel with the axis of abscissas from the trailing ends of the linear line portions L9 and L10, and similarly, in case the steering torque Tₛ increases in a negative direction, four characteristic lines become symmetrical points by sandwiching the above described linear lines and an origin point.

Next, the processing proceeds to step S5, and reads the motor rotation angle signal θ_{M} from the motor rotation angle detection circuit 32, and then, proceeds to step S6, and subjects the read motor rotation angle signal θ_{M} to a differential operation processing so as to calculate a motor rotation angle speed ω, and then, proceeds to step S7.

At this step S7, the motor angle speed ω is multiplied by an inertia gain Kᵢ so as to exclude a torque accelerating and decelerating a motor inertia from the steering torque Tₛ, and calculates an inertia compensation value Iᵢ (= Kᵢ·ω) for inertia compensation control for obtaining a sense of steering having no inertia sense, and at the same time, the absolute value of the steering assist instruction value I_{M}* ismultiplied by a coefficient of friction gain K_{f} so as to calculate the friction compensation value I_{f} (= K_{f}·I_{M}*) for friction compensation control for excluding frictions of a motive power conveying portion and the electric motor from affecting the steering force. Here, a symbol of the friction compensation value I_{f} is decided based on the symbol of the steering torque Tₛ and a steering direction signal which determines oversteering/understeering of the steerage by this steering torque Tₛ.

Next, the processing proceeds to step S8, and subjects the steering torque Tₛ to a differential operation processing, and calculates a center response improvement instruction value Iᵣ for performing the securing of a safety and the compensation of a static friction in an assist characteristic blind zone, and then, proceeds to step S9, and calculates a steering assist compensation value I_{M}*' (=I_{M}* + Iᵢ + If + Iᵣ) by adding the calculated inertia compensation value Iᵢ, friction compensation value I_{f}, and center response improvement instruction value Iᵣ to the steering assist instruction value I_{M}*.

Next, the processing proceeds to step S10, and reads phase currents Imu and Imw outputted to the electric motor 5 detected by the motor current detection circuit 7, and then, proceeds to step S11, and calculates a phase current Imv based on the read phase currents Imu and Imw.

Next, the processing proceeds to step S12, and based on the steering assist compensation value I_{M}*' calculated at step S9 and the motor rotation angle θ_{M} read at step S5, a three phase phase-splitting processing for the conversion into target phase current values Imu*, Imv*, and Imw* of the U phase, V phase, and W phase of an electric motor 4 is performed, and after that, the processing proceeds to step S13.

At this step S13, based on the motor phase currents Imu and Imw read at step S10 and the motor phase current Imv calculated at step S11 as well as the target phase current values Imu*, Imv* and Imw* converted at above described step S12, the processing performs a PID processing for a deviation between the phase currents and the target phase current values so as to perform a current feedback processing for calculating current instruction values Iut, Ivt, and Iwt. Then, the processing proceeds to step S14, and generates pulse width-modulating (PWM) signals corresponding to the calculated current instruction values Iut, Ivt, and Iwt of each of the calculated phases, and outputs these signals to the gate drive circuit 43, and after that, returns to step S1.

Further, the control power generating processing executed by the microcomputer 30, as shown in FIG. 6, is executed as a timer interruption processing for every predetermined time (for example, 10msec) for the predetermined main program. First, at step S21, the processing reads the battery voltage Vb that is converted from the divided battery voltage Vb' detected in the potential dividing circuit 25, and then, proceeds to step S22, and determines whether or not the read battery voltage Vb exceeds a preset upper limit voltage Vc_{H}, and when Vb < Vsu_{H}, determines that a step-up processing is performed by using the step-up circuit 22, and proceeds to step S23.

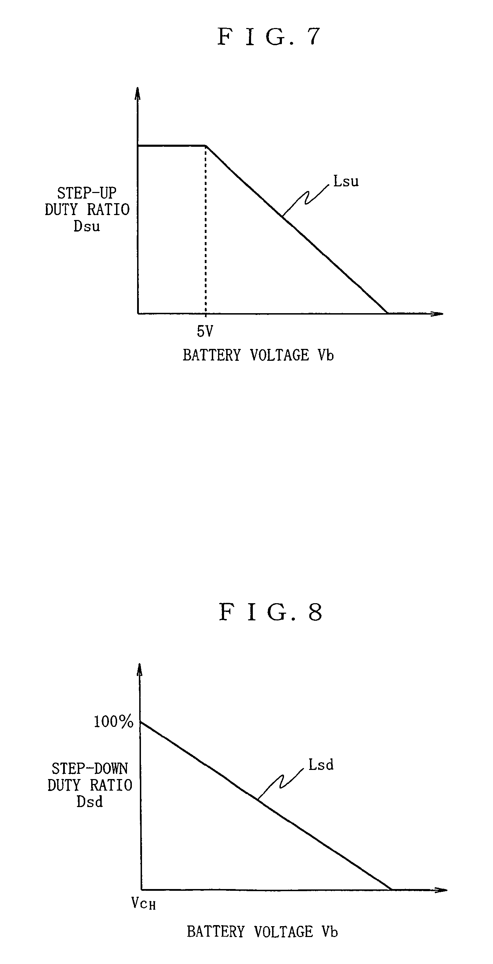

At this step S23, the processing calculates a step-up duty ratio Dsu based on the battery voltage Vb read at step S21 by referring to a step-up duty ratio calculating map shown in FIG. 7, and after that, proceeds to step S24. Here, the step-up duty ratio calculating map, as shown in FIG. 7, sets a characteristic line Lsu in such a manner that, when the battery voltage Vb is equal to a lower limit control voltage Vc_{L}, the step-up duty ratio Dsu is set to 0%, and from this state, the step-up duty ratio Dsu is increased according as the battery voltage Vb is dropped.

Next, at step S25, the processing outputs the pulse width modulating signal of the step-up duty ratio Dsu calculated at step S24 to the field effect transistor FET 7 of the step-up circuit 22, and after that, proceeds to step S26, and after reading the control voltage Vc that is converted from the divided control voltage Vc' detected by the potential dividing circuit 26, proceeds to step S27.

At this step S27, the processing determines whether or not the read control voltage Vc is in the range of the lower limit control voltage Vc_{L} and an upper limit control voltage Vc_{H}, and when Vc_{L} ≤ Vc ≤ Vc_{H}, terminates the timer interruption processing as it is and returns to the predetermined main program, and when Vc < Vc_{L} or Vc > Vc_{H}, proceeds to step S28.

At this step S28, the processing determines whether or not the step-up control voltage Vsu is below the lower limit control voltage Vc_{L}, and when Vsu < Vc_{L}, proceeds to step S29, and after setting a value added with a relatively small predetermined value ΔD to the present step-up duty ratio Dsu as a new step-up duty ratio Dsu, returns to the step S25, and when Vsu > Vc_{L}, proceeds to step S30, and after setting a value subtracting the predetermined value AD from the present step-up duty ratio Dsu as a new step-up duty ratio Dsu, returns to the step S25.

On the other hand, when the determination result of the step S22 is Vb > Vc_{H}, the processing, determining that it is necessary to step down the battery voltage Vb, proceeds to step S31, and after outputting a selection signal SL of a theoretical value "1" for switching the selector switch 21 to the step-down circuit 23 side to the selector switch 21, proceeds to step S32.

At this step S32, the processing calculates a step-down duty ratio Dsd based on the battery voltage Vb by referring to a step-down duty ratio calculating map shown in FIG. 8, and after that, proceeds to step S33. Here, the step-down duty ratio calculating map, as shown in FIG. 8, sets a characteristic line Lsd in such a manner that, when the battery voltage Vb is equal to the upper limit control voltage Vc_{H}, the step-down duty ratio Dsd is set to 100%, and from this state, the step-down duty ratio Dsd is decreased according as the battery voltage Vb is increased.

Next, at step S33, the processing outputs the pulse width modulating signal of the step-down duty ratio Dsd to the field effect transistor FET 8 of the step-down circuit 23, and after that, proceeds to step S34, and after reading the control voltage Vc that is converted from the divided control voltage Vc' detected by the potential dividing circuit 28, proceeds to step S35.

At this step S35, the processing determines whether or not the read control voltage Vc is in the range of the lower limit control voltage Vc_{L} and the upper limit control voltage Vc_{H}, and when Vc_{L} ≤ Vc ≤ Vc_{H}, terminates the timer interruption processing as it is and returns to the predetermined main program, and when Vc < Vc_{L} or Vc > Vc_{H}, proceeds to step S36.

At this step S36, the processing determines whether or not the step-down control voltage Vsd is below the upper limit control voltage Vc_{H}, and when Vsd < Vc_{H}, proceeds to step S37, and after setting a value added with a relatively small predetermined value ΔD to the present step-down duty ratio Dsd as a new step-down duty ratio Dsd, returns to the step S33, and when Vsd > Vc_{H}, proceeds to step S38, and after setting a value subtracting the predetermined value ΔD from the present step-down duty ratio Dsd as a new step-down duty ratio Dsd, returns to the step S33.

Next, the operation of the first embodiment will be described.

Now, suppose that the battery voltage Vb is a normal voltage close to the upper limit control voltage Vc_{H}. In this state, turning on a key switch causes the battery voltage Vb to be supplied to the control device 3 from the in-vehicle battery 1, and a microcomputer control voltage Vcm is generated by the voltage regulator 34 of the control device 3. This voltage is supplied to the microcomputer 30, so that the microcomputer 30 is put into an operating state and the steering assist control processing shown in FIG. 4 and the control power generating processing shown in FIG. 6 are executed and started.

At this time, in the control power generating processing of FIG. 6, since the battery voltage Vb is normal and is a voltage close to the upper limit voltage Vc_{H}, the processing proceeds to step S22 to step S23, and after outputting the selection signal SL of a theoretical value "0" for switching the selector switch 21 to the step-up circuit 22 side to the selector switch 21, proceeds to step S24, and calculates the step-up duty ratio Dsu based on the battery voltage Vb by referring to the step-up duty ratio calculating map of FIG. 7. At this time, since the battery voltage Vb is a relatively high value, the step-up duty ratio Dsu is set to a relatively small value, and the set step-up duty ratio Dsu is supplied to a gate of the field effect transistor FET 7 of the step-up circuit 22, and therefore, when the field effect transistor FET 7 is in a on-state in the step-up circuit 22, electrical energy accumulated in the reactor Lu is outputted to the charge pump 41 through the diode D2 when the field effect transistor FET 7 is in an off-state. Hence, the control voltage Vc outputted from the step-up circuit 22 is controlled within the upper limit control voltage Vc_{H} and the lower limit control voltage Vc_{L}.

In this state, when an ignition switch is put into an on-state so as to activate a starter motor to start an engine, though the battery voltage Vb of the in-vehicle battery 1 is sharply dropped to be decreased to about 6V, in this case, a large step-up duty ratio Dsu is set according to the decrease in the battery voltage Vb, and therefore, the control voltage Vc outputted from the step-up circuit 22 is maintained within the upper limit control voltage Vc_{H} and the lower limit control voltage Vc_{L} regardless of the battery voltage dip.

By supplying this control voltage Vc to the charge pump 41, the control voltage Vc is further stepped up by this charge pump 41 up to a voltage capable of reliably turning on the field effect transistors FET 1 to 6 of the motor drive circuit 6, and the step-up voltage Vu is supplied to the gate drive circuit 43 as a power supply voltage.

When the engine is started, the starter motor is stopped, and therefore, the battery voltage Vb is restored to the normal voltage Vb, and in that event, the step-up duty ratio Dsu is also restored to the small value, thereby maintaining the control voltage Vc in the range of the predetermined voltage.

Assuming that the steering wheel 11 is not steered in this state, the steering torque T detected by the steering torque sensor 17 becomes "0", and in that event, the steering assist current value I_{M}* calculated by the steering assist control processing of FIG. 4 becomes "0", so that the current instruction values Iut, Ivt, and Iwt for the electric motor 5 also become "0", and the pulse width modulating signal outputted to the gate drive circuit 43 also become 50% in duty ratio, and therefore, the duty ratios of the pulse modulating signals PWM 1 to PWM 6 outputted from the gate drive circuit 43 become also 50%, and each of the field effect transistors FET 1 to FET 6 of the motor drive circuit 6 also becomes 50% in duty ratio, thereby putting the electric motor 5 into a stopping state.

When a driver performs a so-called dry steering to steer the steering wheel 11, for example, to the left direction from a state in which a steering force is not conveyed to this steering wheel 11, according to this dry steering, a torque detection signal is outputted from the steering torque sensor 17, and in that event, the steering torque T is inputted to the microcomputer 30 from the steering torque detection circuit 31.

In this microcomputer 30, in the steering assist force control processing of FIG. 4, the processing subtracts the neutral voltage V₀ from the steering torque T to calculate an actual steering torque Tₛ (step S2), and then, reads the vehicle speed detection value Vs from the vehicle speed sensor 33 (step S3), and calculates the steering assist instruction value I_{M}* based on the steering torque T_{S} and the vehicle speed detection value Vs by referring to the steering assist instruction calculating map shown in FIG. 6 (step S4).

On the other hand, the processing reads the motor rotation angle θ_{M} detected by the resolver 18 from the motor rotation angle detection circuit 32 (step S5), and subjects this motor rotation angle θ_{M} to a differential operation so as to calculate the motor angle speed ω (step S6), and based on the calculated motor angle speed ω, calculates the inertia compensation value Iᵢ for inertia compensation control, and at the same time, calculates the friction compensation value If for friction compensation control (step S7), and further, subjects the steering torque Tₛ to a differential operation to calculate the center response improvement instruction value Ir (step S8), and by adding the calculated inertia compensation value Iᵢ, friction compensation value If, and center response improvement instruction value Iᵣ to the steering assist instruction value I_{M}*, calculates the steering assist compensation value I_{M}*'(step S9).

Based on this steering assist compensation value I_{M}*', the processing calculates the current instruction values Iut, Ivt, Iwt of each phase of the electric motor 5 (step S13), and outputs the pulse width modulating signals based on each of these phase current instruction values Iut, Ivt and Iwt to the gate drive circuit 43 (step S14), so that the field effect transistors FET 1 to 6 of the motor drive circuit 6 are subjected to a pulse modulation control by a high voltage supplied from the charge pump 41 by this gate drive circuit 43. By so doing, a three phase drive current is supplied to the electric motor 5 from the motor drive circuit 6, and by this electric motor 5, the steering assist force to the left direction corresponding to the steering torque operated on the steering wheel 11 is generated, and this assist torque is conveyed to the output shaft 12 through a reduction gear 13.

At this time, in a so-called dry steering state in which the steering wheel 11 is steered in a state in which a vehicle is stopped, since the grade of the characteristic line of the steering assist instruction value calculating map shown in FIG. 5 is sharp, a large steering assist instruction value I_{M}* is calculated by a small steering torque Tₛ, and it is, therefore, possible to perform a light steering by generating a large steering assist force by the electric motor 5.

From this stopping state of the vehicle, the vehicle is started and put into atakingoff-state, andinanormal steering state in which the steering wheel 11 is steered in this state, the steering assist torque required according to the increase in the speed becomes low, and therefore, the steering torque conveyed to the steering wheel 11 also becomes small, and this is detected by the steering torque sensor 17 and is inputted to the microcomputer 30. Hence, the steering assist instruction value I_{M}* also becomes small, and the steering assist torque generated by the electric motor 5 becomes small comparing to the steering torque at the time of dry steering.

In this steering assist control state, when the battery voltage Vb of the in-vehicle battery 1 is decreased, as described above, the step-up duty ratio Dsu for the field effect transistor FET 7 of the step-up circuit 22 is increased, so that a step-up rate is increased to maintain the control voltage Vc in an appropriate range, thereby to allow the charge pump 41 to generate a stable step-up voltage Vu, and by so doing, an on-off control of the field effect transistors FET 1 to FET 6 of the motor drive circuit 6 can be accurately performed by the gate drive circuit 43.

On the other hand, in case the battery voltage Vb of the in-vehicle battery 1 exceeds the upper limit control voltage Vc_{H} due to some kind of cause, for example, battery terminal spread open and the like, by the control power generating processing of FIG. 6, the processing proceeds to step S22 to step S31, so that the selection signal SL of the theoretical value "1" for switching the selector switch 21 to the step-down circuit 23 side is outputted to the selector switch 21, and thus, the selector switch 21 is switched over to the step-down circuit 23 side, and the step-down duty ratio Dsd is calculated based on the battery voltage Vb by referring to the step-down duty ratio calculating map of FIG. 8.

This step-down duty ratio Dsd is supplied to the gate of the field effect transistor FET 8 of the step-down circuit 23, so that this field effect transistor FET 8 is on-off controlled based on the step-down duty ratio Dsd, and in this manner, the control voltage Vc in which the battery voltage Vb is stepped down is controlled in the normal control voltage range within the upper limit control voltage Vc_{H} and the lower limit control voltage Vc_{L}, and even in case the battery voltage Vb is increased, the control voltage Vc can be maintained in the range of the normal control voltage, and with the battery voltage Vb increased to the high voltage, the stopping of the operation of the control device 3 can be avoided for protection of controlling elements.

By the way, since the step-down circuit is not provided in the conventional example, in order to protect the controlling elements at the rising time of the battery voltage Vb due to terminal spread open and the like, it is necessary to stop the operation of the control device 3 so as to stop the steering assist control processing. However, since the present embodiment has the step-down circuit 23, by this step-down circuit 23, the battery voltage Vb can be stepped down to generate the control voltage Vc in the normal range, and the steering assist control processing can be continued in the control device 3.

Further, according to the first embodiment as described above, since the control voltage Vc can be maintained reliably within the normal range by the control voltage generating circuit 20 regardless of the fluctuation of the battery voltage Vb, it is possible to maintain the step-up voltage Vu outputted from the charge pump 41 always within a constant high voltage, and the driving of the field effect transistors FET 1 to FET 6 of the motor drive circuit 6 by the gate drive circuit 43 can be accurately performed.

Further, since the control voltage Vc generated by the control voltage generating circuit 20 and controlled in the normal range is supplied to the motor current detection circuit 7, the steering torque sensor 17, and the resolver 18 as the control voltage, the output signals in each of these control circuits can be reliably avoided from being affected at the dip time of the battery voltage Vb, and an accurate steering assist control processing can be performed.

Further, when the step-down circuit 23 is provided in the control voltage generating circuit 20 similarly to the first embodiment, even in case the battery voltage Vb has a high voltage abnormality, the control voltage Vc can be maintained in the normal range to continue the steering assist control processing, thereby extending the range of the steering assist control.

Furthermore, as the step-up circuit 22, since it is simply constituted such that it only generates the control power supplyvoltage Vc and is not connected to the motor drive circuit 6, and no regenerative power of the motor is inputted, and the diode D2 for protecting reverse current alone is provided, and there is no need for switching elements such as the field effect transistors and the like to return the regenerative current to the in-vehicle battery 1 side.

Incidentally, in the first embodiment, though a description has been made on the case where the step-down circuit 23 is provided in the control voltage generating circuit 20, it is not limited to this case, and the step-down circuit 23 may be omitted to constitute the circuit 20 by the step-up circuit 22 only, thereby performing the stabilization of the lowest minimum control voltage Vc.

Further, in the first embodiment, though a description has been made on the case where the control voltage generating circuit 20 and the gate drive circuit 43 are controlled by the microcomputer 30 in the embodiment, it is not limited to this case, and a separate microcomputer is adopted for the control voltage generating circuit 20 and the gate drive circuit 43, and with this arrangement, the processings of FIGS. 4 and 6 may be separately performed.

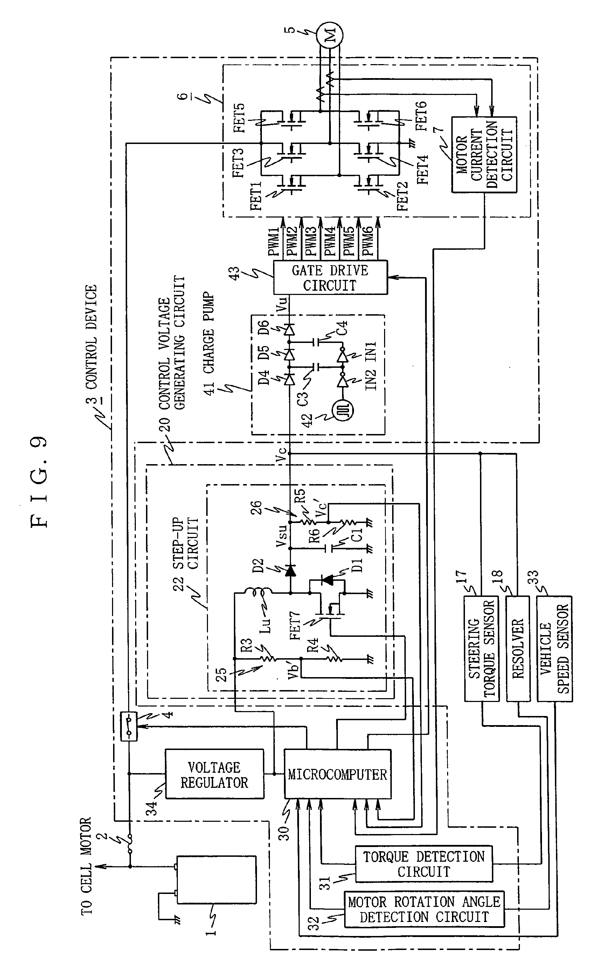

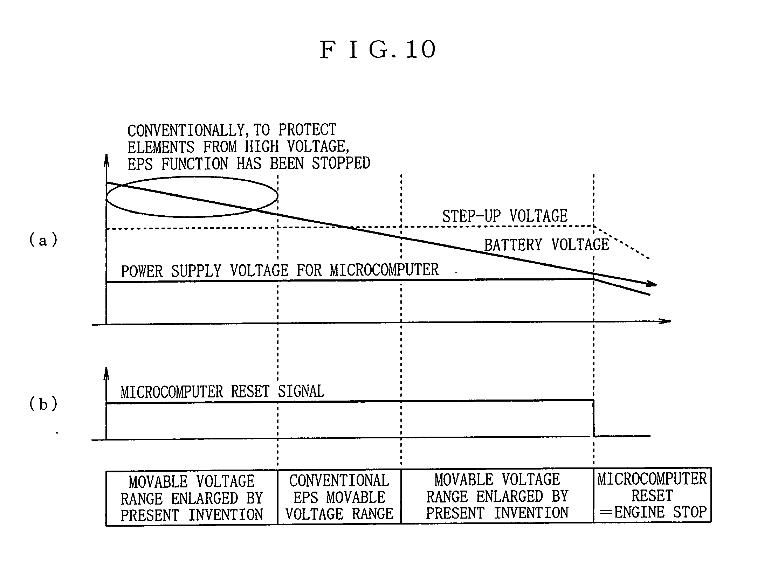

Next, a second embodiment of the present invention will be described with reference to FIGS. 9 and 10.

In this second embodiment, an output voltage of a voltage regulator 34 for supplying a control power supply to a microcomputer 30 is stepped up by a step-up circuit.

That is, in the second embodiment, as shown in FIG. 9, the selector switch 21 and the step-down circuit 23 in FIG. 3 in the first embodiment are omitted, and except that, in replace of these elements, one end of a reactor Lu of a step-up circuit 22 is connected to the output side of a voltage regulator 34 the second embodiment has the same constitution as FIG. 3, the same reference numerals are attached to the elements corresponding to FIG. 3, and the detailed description thereof will be omitted.

In this case, in a voltage regulator 34, since the battery voltage can maintain a power supply voltage Vcm regardless of the fluctuation of a battery voltage Vb until the battery voltage is dropped below the power supply voltage Vcm (for example, 5V) supplied to the microcomputer 30, a duty ratio Dsu of a pulse width modulating signal for a field effect transistor FET 7 of the step-up circuit 22 only steps up a control voltage Vc requiring constant power supply voltage Vcm of a voltage regulator 34 to a required control voltage Vc, and since the step-up rate is constant, it is only enough to control the control voltage Vc to a constant step-up duty ratio D according to the step up rate, so that the above described control voltage generating processing in the first embodiment can be omitted.

According to this second embodiment, as shown in FIG. 10, the power supply voltage Vcm outputted to the microcomputer 30 from the voltage regulator 34 maintains a constant voltage until the battery voltage Vb falls below the power supply voltage Vcm, and when the battery voltage Vb falls below the power supply voltage Vcm, the power supply voltage Vcm is dropped according to the dip of the battery voltage Vb.

Hence, by stepping up the power supply voltage Vcm by the step-up circuit 22 by a constant step-up ratio, as shown in FIG. 10 by a dotted line, the control voltage Vc can be maintained at a relatively high constant voltage, and this control voltage Vc is also decreased when the battery voltage Vb falls below the power supply voltage Vcm.

When the power supply voltage Vcm is dropped below a constant value, in the microcomputer 30, a reset signal becomes, for example, a theoretical value "0", and the microcomputer 30 is reset.

Consequently, in the control voltage generating circuit 20, since it is possible to generate a constant control voltage Vc during a period until the microcomputer 30 is reset, the steering assist control can be reliably continued during this period.

Moreover, since the power supplyvoltage Vcmof the voltage regulator 34 is taken as an input voltage of the step-up circuit 22, even in case the battery voltage Vb has a high voltage abnormality due to the battery terminal spread open and the like, the power supply voltage Vcm can maintain a constant value, and therefore, the control voltage Vc can also maintain a constant value, and it is possible to cope with the high voltage abnormality of the battery voltage without providing the step-down circuit.

Hence, the constitution of the control voltage generating circuit 20 can be made much simpler by the step-up circuit 22 only, and at the same time, there is no need to perform a complicated control voltage generating processing, and moreover, the control range of the steering assist control processing can be enlarged much wider.

By the way, in the conventional example, as the input voltage of the charge pump 41, since the battery voltage Vb is used as it is, when the battery voltage Vb is dropped, the step-up voltage of the charge pump 41 is also dropped, and hence, in the gate drive circuit 43, it is no longer possible to turn on each of the field effect transistors FET 1 to FET 6 of the motor drive circuit 6 and perform an accurate motor driving. However, in the first and second embodiments, since the battery voltage or the power supply voltage of the voltage regulator 34 is stepped up by the step-up circuit 22 to generate the control voltage Vc, it is possible to reliably prevent the shortage of the input voltage by the charge pump 41.

Incidentally, in the first and second embodiments, though a description has been made on the case where a step-up chopper constituting the step-up circuit 22 is constituted by the reactor Lu, the field effect transistor FET 7, and the diode D2, it is not limited to this case, and in place of the step-up chopper, an arbitrary step-up circuit such as a DC-DC converter, a switched capacitor, and the like can be adopted.

Further, in the first and second embodiments, though a description has been made on the case where the charge pump 41 is applied as a power supply step-up circuit, it is not limited to this case, and any other set-up circuits such as a set-up chopper may be adopted. In addition, the charge pump 41 is not limited to the configurations according to the first and second embodiments, and a charge pump of any configuration may be adopted.

Further, in the first and second embodiments, though a description has been made on the case where the control voltage generating circuit 20 is provided outside the control device 3 and the control voltage Vc generated in the control voltage generating circuit 20 is supplied to the charge pump 41, it is not limited to this case, and the control voltage generating circuit 20 may be incorporated in the control device 3, and the control voltage Vc generated in the control voltage generating circuit 20 may be supplied to the charge pump 41.

Further, in the first and second embodiments, though a description has been made on the case where the motor rotation angle is detected by using the resolver 18, it is not limited to this case, and a rotation angle sensor using a rotary encoder, a hall element, and the like may be adopted.

Furthermore, in the first and second embodiments, though a description has been made on the case where a three phase brushless motor is adopted as an electric motor 5, it is not limited to this case, and a brushless motor of four or more phases, a direct current driven motor, and the like may be adopted.

Still further, in the first and second embodiments, though a description has been made on the case where the circuits adopting the control voltage Vc are taken as the gate drive circuit 43, the steering torque sensor 17, and the resolver 18, it is not limited to the case, and these circuits may be adopted to the steering angle sensor, a hall sensor, the rotary encoder, and the like. Further, in case the steering torque sensor has a constitution where the step-up voltage is not required similarly to the case where the sensor is constituted by a potentiometer, the supply of the control voltage Vc can be omitted.

## Claims

1. An electric power steering control device comprising
steering torque detection means for detecting a steering torque, an electric motor for generating a steering assist force for a steering system, and steering assist control means for controlling said electric motor based on the steering torque detected by said steering torque detection means,
wherein said electric power steering control device comprises a control power generating circuit for adjusting a battery voltage of an in-vehicle battery to generate a control power and supplying the generated control power at least to said steering assist control means.

2. An electric power steering control device comprising
steering torque detection means for detecting a steering torque, an electric motor for generating a steering assist force for a steering system, and steering assist control means for controlling said electric motor based on the steering torque detected by said steering torque detection means,
wherein said electric power steering control device comprises a control power generating circuit for adjusting a battery voltage of an in-vehicle battery to generate a control power, and said steering assist control means comprises a microcomputer for executing at least a steering control processing, a motor drive circuit having a switching element for driving said electric motor, a gate drive circuit for driving and controlling said switching element of said motor drive circuit based on an instruction from said microcomputer, and a power supply step-up circuit for supplying a high voltage to said gate drive circuit, and wherein the control power generated in said control power generating circuit is supplied to said power supply step-up circuit.

3. The electric power steering control device according to claim 2, wherein said power supply step-up circuit is constituted by a charge pump.

4. The electric power steering control device according to any one of claims 1 to 3, wherein said electric power steering control device has battery voltage detection means for detecting a low voltage state in which the battery voltage of said in-vehicle battery is dropped below a set voltage, and wherein said control power generating circuit comprises a control power step-up circuit which is connected in series to the in-vehicle battery and, when the low voltage state is detected by said battery voltage detection means, steps up the battery voltage to a voltage required in a control power supply target apparatus, thereby generating the control power.

5. The electric power steering control device according to any one of claims 1 to 4, wherein said electric power steering control device has battery voltage detection means for detecting a high voltage state in which the battery voltage of said in-vehicle battery is increased above the set voltage and wherein said control power generating circuit comprises a control power step-down circuit which, when a high voltage state is detected by the battery voltage detectionmeans, steps down said battery voltage to a voltage required in the control power supply target apparatus, thereby generating the control power.

6. The electric power steering control device according to claim 1, wherein said steering assist control means has at least a microcomputer and a voltage regulator for generating a control voltage supplied to said microcomputer based on the battery voltage of said in-vehicle battery, and wherein said control power generating circuit comprises a control power step-up circuit which is connected in series to said voltage regulator and steps up the output voltage of the voltage regulator to a voltage required in the control power supply target apparatus, thereby generating the control power.

7. The electric power steering control device according to claim 2, wherein the steering assist control means comprises a voltage regulator for generating a control voltage supplied to said microcomputer, and said control power generating circuit comprises a control power step-up circuit which is connected in series to the voltage regulator and steps up the output voltage of the voltage regulator to a voltage required in the control power supply target apparatus, thereby generating the control power.
